# EUROPÄISCHE PATENTSCHRIFT

(11) **EP 1 208 294 B1**
(45) Veröffentlichungstag und Bekanntmachung des Hinweises auf die Patenterteilung: **09.02.2005**
(21) Anmeldenummer: 00962246.5
(22) Anmeldetag: 31.08.2000
(51) Int. Cl.: F02C 3/20, F02C 3/32, F02C 7/143

(54) **VERFAHREN UND EINRICHTUNG ZUR ERHÖHUNG DES DRUCKS EINES GASES**
METHOD AND DEVICE FOR INCREASING THE PRESSURE OF A GAS
PROCEDE ET DISPOSITIF PERMETTANT D'AUGMENTER LA PRESSION D'UN GAZ

(30) Priorität: 01.09.1999 DE 19941685
(43) Veröffentlichungstag der Anmeldung: 29.05.2002
(73) Patentinhaber: SIEMENS AKTIENGESELLSCHAFT, 80333 München (DE)
(72) Erfinder: WEBER, Thomas, D-10585 Berlin (DE); STUHLMÜLLER, Franz, D-91056 Erlangen (DE)
(86) Internationale Anmeldenummer: PCT/DE2000/002975
(87) Internationale Veröffentlichungsnummer: WO 2001/016471

(56) Entgegenhaltungen:
- EP-A- 0 462 458
- DE-A- 2 642 347
- DE-A- 3 744 565
- DE-A- 3 801 886
- DE-C- 870 781
- GB-A- 713 553
- US-A- 4 677 829
- US-A- 5 688 296
- US-A- 5 918 466
- PATENT ABSTRACTS OF JAPAN vol. 013, no. 094 (M-804), 6. März 1989 (1989-03-06) -& JP 63 285230 A (HITACHI LTD;OTHERS: 01), 22. November 1988 (1988-11-22)

## Beschreibung

Die Erfindung bezieht sich auf ein Verfahren und eine Einrichtung zur Erhöhung des Drucks eines Gases, insbesondere der von einem Kompressor in einem Kraftwerk gelieferten Luft, unter Verwendung eines Boosters. Bei dem Gas kann es sich speziell, wie erwähnt, um die von einem Kompressor angelieferte Luft handeln, die mit einem großen Massenstrom und einer hohen Temperatur vom Kompressor bereitgestellt wird.

Bei einem Kraftwerk mit einem System zur Kohleumwandlung unter Druck wird komprimierte Luft vom Austritt eines Verdichters oder Kompressors entnommen und nach einem Vergasungs- und/oder Verbrennungsvorgang mit hoher Temperatur als Rauchgas in den Expander-Teil einer Gasturbine eingeführt. Bedingt durch den Kohlenumwandlungsprozeß tritt auf dem Wege der komprimierten Luft vom Austritt des Kompressors zum Eintritt der Gasturbine ein gewisser Druckverlust auf. Zur Einhaltung des notwendigen Abstands zur Verdichterpumpgrenze darf dabei dieser Druckverlust auf dem Wege vom Kompressoraustritt zum Turbineneintritt kritische Grenzwerte nicht überschreiten (Pumpgrenzkurve, Betriebsgrenzkurve). Bei einem solchen Kraftwerk kann nun ein sehr hoher Druckverlust vorliegen, da im Pfad der Luft je nach Schaltung gewisse Baukomponenten, wie eine Einrichtung zur Druckwirbelschicht-Feuerung, ein Kohle-Vergaser, eine Einrichtung zur Gasreinigung und/oder ein Nachbrenner, angeordnet sein können. Dieser Druckverlust liegt beispielsweise bei einem Kraftwerk, das mit einer Einrichtung zur Druckwirbelschicht-Feuerung der zweiten Generation arbeitet, in der Größenordnung von 2 bar. Dieser hohe Druckverlust würde ohne weitere Maßnahmen den Einsatz einer Gasturbine der Leistungsklasse "Heavy Duty Gas Turbine" unmöglich machen.

Nun kann man daran denken, den hohen Druckverlust durch den Einbau eines Gebläses oder Boosters zu überwinden. Ein solcher Booster muß für den gesamten Massenstrom der benötigten Luft ausgelegt sein. Ein derartiger Booster, wie er heutzutage verfügbar ist, läßt jedoch aus Materialgründen nur eine Betriebstemperatur zu, die möglicherweise unter der der vom Verdichter zuströmenden Luft liegt. Daher ist bei dieser Booster-Lösung eventuell zusätzlich noch ein relativ großer und kostenintensiver Luftkühler notwendig, der dem Booster vorgeschaltet sein muß. Der Booster selbst ist wegen der unkonventionellen Anforderungen, nämlich bezüglich der Bewältigung eines sehr großen Massenstroms, der Erzeugung einer relativ kleinen Druckdifferenz von etwa 1,5 bar und der Standhaltung von hohen Temperaturen, ebenfalls kostspielig.

Hinsichtlich der vorliegenden Erfindung ist aus dem Stand der Technik beispielsweise das Dokument DT 2642347 A1 bekannt. Hierin sind eine Einrichtung und ein Verfahren zum schnellen Anfahren von Gasturbinen offenbart. Die Einrichtung weist einen Druckluftspeicher auf, wobei die darin befindliche Luft mit einem Wärmetauscher in Kontakt steht.

Im Weiteren ist beispielsweise aus der EP 0 462 458 A1 ein Verfahren zur Erhöhung des verdichterbedingten Druckgefälles einer Gasturbine einer Gasturbogruppe mit einem nachgeschalteten Abhitzedampferzeuger bekannt, wobei unmittelbar stromauf der Gasturbine ein Injektor wirkt, durch dessen Fangdüse die vorverdichtete Luft aus dem Verdichter strömt. Die Treibdüse des Injektors wird durch mindestens einen Teil des im Abhitzedampferzeugers anfallenden Dampfes beaufschlagt, wodurch die Verdichterluft weiterverdichtet wird, ohne Leistungsaufnahme aus der Ausbeute der Gasturbine.

Aufgabe der Erfindung ist es demnach, ein Verfahren und eine Einrichtung der eingangs genannten Art zur Erhöhung des Drucks eines Gases anzugeben, bei denen ebenfalls von einem Booster oder Gebläse Gebrauch gemacht wird, bei denen aber die angestrebte Druckerhöhung vergleichsweise kostengünstig erzielbar ist.

Bezüglich des Verfahrens wird diese Aufgabe erfindungsgemäß dadurch gelöst, daß der Massenstrom des Gases unterteilt wird in einen kleineren Teilstrom und in einen größeren Teilstrom, daß der kleinere Teilstrom über den Booster einem Ejektor zugeleitet und dort mit dem größeren Teilstrom, der dem Saugstutzen des Ejektors zugeführt wird, zusammengeführt wird, und daß am Ausgang des Ejektors der zusammengeführte Massenstrom des Gases abgegriffen wird, wobei insbesondere um hier gegebenenfalls den Booster vor zu hohen Temperaturen zu schützen, der kleinere Teilstrom vor der Zuleitung zum Booster abgekühlt wird.

Der kleinere Teilstrom kann etwa 20 bis 40% des Massenstroms des angelieferten Gases ausmachen. Auf dem Gebiet eines Kraftwerks ist das Massenstrom-Verhältnis abhängig von der Komponentenauslegung.

Von Vorteil ist es, wenn der am Ausgang des Boosters auftretende kleinere Teilstrom bezüglich Druckschwankungen geglättet wird.

Für die eingangs genannte Anwendung des Verfahrens in einem Kraftwerk mit einer Einrichtung zur Druckwirbelschicht-Feuerung der zweiten Generation ist es insbesondere von Vorteil, wenn der Druckunterschied im Massenstrom vor der Unterteilung und nach der Zusammenführung so hoch ist, daß der auftretende Druckverlust zwischen dem Austritt des Kompressors und dem Eintritt der Gasturbine nicht nur reduziert, sondern praktisch vollständig kompensiert wird.

Die zur Lösung der genannten Aufgabe vorgesehene Einrichtung zur Erhöhung des Drucks eines Gases zeichnet sich erfindungsgemäß aus durch einen Stromteiler, mit dem der Massenstrom des Gases unterteilbar ist in einen kleineren Teilstrom und in einen größeren Teilstrom, durch einen Ejektor, dem der kleinere Teilstrom über den Booster zuleitbar ist, und eine Bypass-Leitung, über die der größere Teilstrom dem Saugstutzen des Ejektors zuleitbar ist, wobei insbesondere wenn der angelieferte Gasstrom eine zu hohe Temperatur hat, so daß der Booster thermisch gefährdet wäre, der kleinere Teilstrom über einen Luftkühler dem Booster zugeleitet wird.

Gemäß einer weiteren vorteilhaften Ausbildung ist vorgesehen, daß der Booster mit dem Ejektor über eine Leitung verbunden ist, an die zur Glättung von Druckschwankungen ein Pufferbehälter angeschlossen ist.

Der Ausgang des Ejektors kann in einem Kraftwerk mit verschiedenen Komponenten verbunden sein, die das druckerhöhte Gas, insbesondere Luft, zu ihrem Betrieb benötigen.

Weitere vorteilhafte Ausgestaltungen sind in den Unteransprüchen gekennzeichnet.

Ein Ausführungsbeispiel der Erfindung wird im folgenden anhand einer Figur näher erläutert.

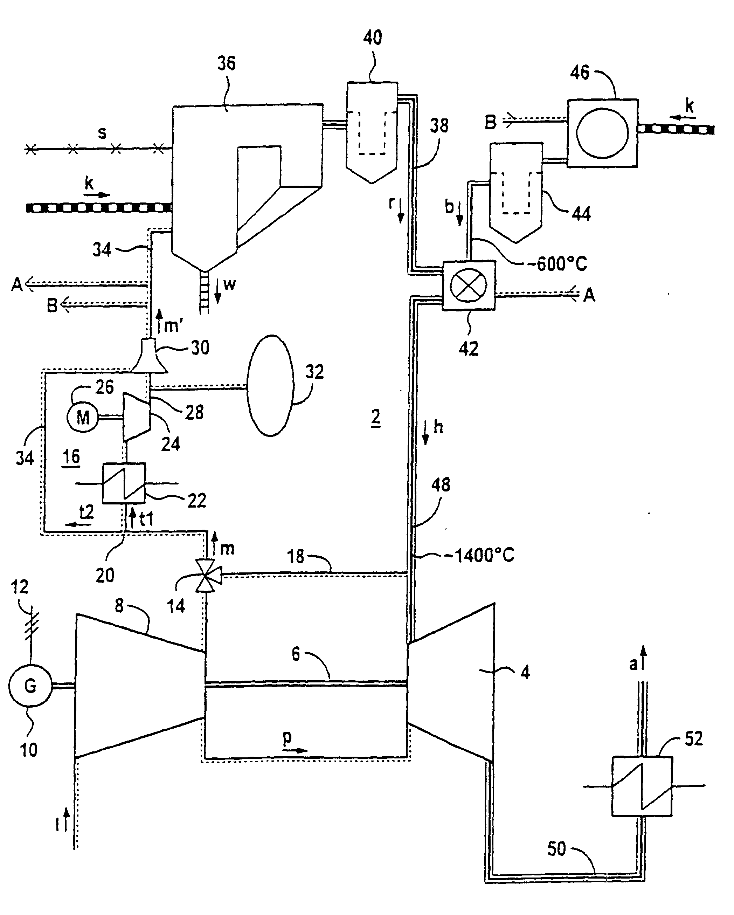

Die Figur zeigt ein Kraftwerk 2 mit einer Gasturbine 4, auf deren Welle 6 ein Kompressor 8 und ein elektrischer Generator 10 sitzen. Der Generator 10 liefert elektriscne Energie in ein Netz 12. Dem Kompressor 8 wird über ein (nicht gezeigtes) Filter Ansaugluft 1 zugeführt. Die vom Kompressor 8 komprimierte Ansaugluft 1 wird zum einen der Gasturbine 4 als Kühlluft p und zum anderen weiteren Komponenten des Kraftwerks 2 als Massenstrom m zugeführt. Dieser Massenstrom m gelangt über ein Dreiwegeventil 14 in eine Einrichtung 16 zur Erhöhung des Drucks. Im Notfall kann der Massenstrom m vom Dreiwegeventil 14 über einen Not-Bypass 18 direkt in die Gasturbine 4 eingespeist werden.

Die Einrichtung 16 besitzt einen Stromteiler 20, mit dem der Massenstrom m des Gases unterteilt wird in einen Kleineren Teilstrom t1 und in einen größeren Teilstrom t2. Das Massenstrom-Verhältnis dieser beiden Teilströme t1, t2 ist abhängig von der Auslegung der weiteren Komponenten und beträgt hier beispielsweise 20% zu 80%. Der kleinere Teilstrom t1 wird über einen Luftkühler 22, der in einen (nicht gezeigten) Wasser-Dampf-Kreis eingeschaltet ist, einem Booster 24, der von einem Motor 26 angetrieben wird, zugeleitet. Dieser Booster 24 ist über eine Leitung 28 mit einem Ejektor 30 verbunden. An die Leitung 28 ist zur Glättung von Druckschwankungen ein Pufferbehälter 32 angeschlossen. Der größere Teilstrom t2 wird über eine Bypass-Leitung 34 dem Saugstutzen des Ejektors 30 zugeführt. In diesem Ejektor 30 werden somit die beiden Teilströme t1, t2 wiederum zusammengeführt, so daß an dessen Ausgang der zusammengeführte Massenstrom m' der Luft abgegriffen werden kann. Der Druckunterschied in den Massenströmen m und m' beträgt, entsprechend den in den folgenden Komponenten auftretenden Druckverluste, vorliegend etwa 2 bar.

Der Ausgang des Ejektors 30 ist über eine Ausgangsleitung 34 mit einer Einrichtung 36 zur Druckwirbelschicht-Feuerung verbunden. An dieser Ausgangsleitung 34 sind zwei Luftentnahmen vorgesehen, die mit A und B bezeichnet sind und die zu weiteren Komponenten des Kraftwerks 2 führen.

Die Einrichtung 36 wird nicht nur mit Druckluft, sondern auch mit Kohle k und mit einem Sorbent s, beispielsweise mit Kalkstein (CaCO₃), gespeist. An einem Ausgang wird Wirbelschichtasche w abgezogen. Das in der Einrichtung 36 entstehende Wirbelschicht-Rauchgas r, beispielsweise mit einer Temperatur von 900 °C, wird über eine Leitung 38, in der sich ein Rauchgasfilter 40 befindet, einem Nachbrenner 42 zugeleitet. Dieser Nachbrenner 42 wird außerdem mit Luft aus der Luftentnahme A versorgt. Das Wirbelschicht-Rauchgas r kann beispielsweise eine Temperatur von 900 °C besitzen.

Der Nachbrenner 42 wird außerdem mit einem Brenngas b gespeist. Dieses Brenngas b kann beispielsweise eine Temperatur von 600 °C besitzen. Es wird über ein Brenngas-Filter 44 einem Kohle-Vergaser 46 entnommen. Dieser Kohle-Vergaser 46 wird einerseits mit Kohle k und andererseits mit Luft aus der Luftentnahme B gespeist.

Den Nachbrenner 42 verläßt heißes Rauchgas h, das beispielsweise eine Temperatur von etwa 1400 °C besitzt. Es wird dem Eintritt der Gasturbine 4 über eine Rauchgasleitung 48 zugeleitet.

Das von der Gasturbine 4 abgegebene Abgas a wird über eine Abgasleitung 50 und einen Abwärmekessel 52 einem (nicht gezeigten) Schornstein zur Abgabe in die Umgebung zugeführt.

Zusammenfassend läßt sich also sagen: Vorwiegend wird der zu verdichtende Massenstrom m an Luft in einen kleineren und einen größeren Teilstrom t1 bzw. t2 separiert. Das Verhältnis beider Massenströme t1, t2 ist - wie bereits erwähnt - abhängig von der Komponentenauslegung. Der kleinere Teilstrom wird im Luftkühler 22 von z.B. 400 °C auf ca. 150 bis 200 °C abgekühlt. Der hierfür benötigte Wärmetauscher 22 fällt wesentlich kleiner und damit kostengünstiger aus, als wenn der gesamte Massenstrom m abgekühlt werden müßte. Anschließend wird der kleinere Teilstrom t1 mit einer recht hohen Druckdifferenz im Booster 24 verdichtet. Diese Druckdifferenz kann beispielsweise 10 bis 20 bar betragen. Ein derartiger Verdichter oder Booster 24, der für einen relativ kleinen Massenstrom bei hoher Druckdifferenz ausgelegt ist, ist eine konventionelle Komponente. Er ist daher erheblich preisgünstiger als der oben erwähnte Booster für große Massenströme und geringe Druckdifferenzen. Auf der Druckseite des Boosters 24 ist der Pufferbehälter 32 zur Minderung von Druckschwankungen angebracht.

Der größere Teilstrom t2 wird in der Bypass-Leitung 34 am Luftkühler 22, am Booster 24 und am Druckpuffer oder Pufferbehälter 32 vorbei geführt. Er gelangt zum Saugstutzen des Ejektors 30, der nach dem Prinzip einer sogenannten Wasserstrahlpumpe oder Dampfstrahlpumpe aufgebaut ist. Als Treib- oder Beschleunigungsmedium für den Ejektor 30 dient dabei der kleinere Teilstrom t1 auf seinem höheren Druckniveau. Der Gesamtluftstrom m' am Austritt des Ejektors 30 ist durch die Einrichtung 16 so eingestellt, daß er den notwendigen Gesamtdruck aufweist, um die Druckverluste des zwischen dem Austritt des Kompressors 8 und dem Eintritt der Gasturbine 4 liegenden Systems in der notwendigen Höhe zu kompensieren.

Gegenüber der eingangs geschilderten Booster-Lösung, wonach der Gesamt-Massenstrom einem Luftkühler und einem nachgeschalteten Booster zugeführt wird, verringert sich hier aufgrund des kleineren zu kühlenden Luftstroms t1 die an den am Luftkühler 22 angeschlossenen Wasser-Dampf-Kreis zu übertragende Wärmeleistung. Der Leistungsanteil der Gasturbine 4 an der Gesamtleistung und damit der Gesamtwirkungsgrad steigen an.

Gegenüber der besagten, eingangs geschilderten Booster-Lösung liegt der Kern der vorliegenden Erfindung im Ersatz zweier großer und kostspieliger Komponenten zur Druckerhöhung, nämlich einem großen Luftkühler und einem großen Booster, durch ein System, das besteht aus einem Luftkühler 22 und einem konventionellen Booster 24 geringerer Größe sowie einem Ejektor 30 und einem Pufferbehälter 32. Insbesondere beim Übergang auf den kleineren Booster 24 mit höherem Druckverhältnis ergibt sich eine Kosteneinsparung, da diese Dimensionierung konventionell und damit relativ preisgünstig ist. Auch beim Luftkühler 22 wirkt sich die kleinere Bauart stark kostenmindernd aus.

## Patentansprüche

1. Verfahren zur Erhöhung des Drucks eines Gases, insbesondere der von einem Kompressor (8) in einem Kraftwerk (2) gelieferten Luft, mit einem Booster (24), wobei der Massenstrom (m) des Gases unterteilt wird in einen kleineren Teilstrom (t1) und in einen größeren Teilstrom (t2), der kleinere Teilstrom (t1) über den Booster (24) einem Ejektor (30) zugeleitet und dort mit dem größeren Teilstrom (t2), der dem Saugstutzen des Ejektors (30) zugeführt wird, zusammengeführt wird, und am Ausgang des Ejektors (30) der zusammengeführte Massenstrom (m') des Gases abgegriffen wird,
**dadurch gekennzeichnet, daß** der kleinere Teilstrom (t1) vor der Zuleitung zum Booster (24) abgekühlt wird.

2. Verfahren nach Anspruch 1,
**dadurch gekennzeichnet, daß** der kleinere Teilstrom (t1) etwa 20 - 40%, vorzugsweise etwa 20%, des Massenstroms (m) des angelieferten Gases ausmacht.

3. Verfahren nach einem der Ansprüche 1 oder 2,
**dadurch gekennzeichnet, daß** der am Ausgang des Boosters (24) austretende kleinere Teilstrom (t1) bezüglich Druckschwankungen geglättet wird.

4. Verfahren nach einem der Ansprüche 1 bis 3,
**dadurch gekennzeichnet, daß** der Druckunterschied im Massenstrom (m, m') vor der Unterteilung und nach der Zusammenführung etwa 2 bar beträgt.

5. Einrichtung (16) zur Erhöhung des Drucks eines Gases, insbesondere der von einem Kompressor (8) in einem Kraftwerk (2) gelieferten Luft, mit einem Booster (24), einem Stromteiler (20), mit dem der Massenstrom (m) des Gases unterteilbar ist in einen kleineren Teilstrom (t1) und in einen größeren Teilstrom (t2), einem Ejektor (30), dem der kleinere Teilstrom (t1) über den Booster (24) zuleitbar ist, und eine Bypass-Leitung (34), über die der größere Teilstrom (t2) dem Saugstutzen des Ejektors (22) zuleitbar ist,
**dadurch gekennzeichnet, daß** der kleinere Teilstrom (t1) über den Luftkühler (22) dem Booster (24) zuleitbar ist.

6. Einrichtung nach Anspruch 5,
**dadurch gekennzeichnet, daß** der kleinere Teilstrom (t1) etwa 20 - 40%, vorzugsweise etwa 20%, des Massenstroms (m) der angelieferten Luft ausmacht.

7. Einrichtung nach einem der Ansprüche 5 oder 6,
**dadurch gekennzeichnet, daß** der Booster (24) mit dem Ejektor (30) über eine Leitung (28) verbunden ist, an die zur Glättung von Druckschwankungen ein Pufferbehälter (32) angeschlossen ist.

8. Einrichtung nach einem der Ansprüche 5 bis 7,
**dadurch gekennzeichnet, daß** der Ausgang des Ejektors (30) mit
a) einer Einrichtung (36) zur Druckwirbelschicht-Feuerung und/oder
b) einem Nachbrenner (42) und/oder
c) einem Kohle-Vergaser (46)
verbunden ist.

9. Einrichtung nach einem Ansprüche 5 bis 8,
**dadurch gekennzeichnet, daß** sie in ein Kraftwerk (2) eingebaut ist, insbesondere in ein Kraftwerk (2) mit einer Einrichtung (36) zur Druckwirbelschicht-Feuerung und mit einem Kohle-Vergaser (46).

## Claims

1. Method for increasing the pressure of a gas, in particular of the air delivered in a power station (2) by a compressor (8), with a booster (24), the mass stream (m) of the gas being subdivided into a smaller part stream (t1) and into a larger part stream (t2), the smaller part stream (t1) being delivered to an ejector (30) via the booster (24) and being combined there with the larger part stream (t2) which is supplied to the suction nipple of the ejector (30), and the combined mass stream (m') of the gas being picked up at the outlet of the ejector (30), **characterized in that** the smaller part stream (t1) is cooled before delivery to the booster (24).

2. Method according to Claim 1, **characterized in that** the smaller part stream (t1) is about 20 - 40%, preferably about 20%, of the mass stream (m) of the delivered gas.

3. Method according to one of Claims 1 or 2, **characterized in that** the smaller part stream (t1) emerging at the outlet of the booster (24) is smoothed with respect to pressure fluctuations.

4. Method according to one of Claims 1 to 3, **characterized in that** the pressure difference in the mass stream (m, m') before subdivision and after combination is about 2 bar.

5. Device (16) for increasing the pressure of a gas, in particular of the air delivered in a power station (2) by a compressor (8), with a booster (24), a stream divider (20), by means of which the mass stream (m) of the gas can be subdivided into a smaller part stream (t1) and into a larger part stream (t2), an ejector (30), to which the smaller part stream (t1) can be delivered via the booster (24), and a bypass line (34), via which the larger part stream (t2) can be delivered to the suction nipple of the ejector (22), **characterized in that** the smaller part stream (t1) is capable of being delivered to the booster (24) via the air cooler (22).

6. Device according to Claim 5, **characterized in that** the smaller part stream (t1) is about 20 - 40%, preferably about 20%, of the mass stream (m) of the delivered air.

7. Device according to one of Claims 5 or 6, **characterized in that** the booster (24) is connected to the ejector (30) via a line (28), to which a buffer tank (32) is connected for the smoothing of pressure fluctuations.

8. Device according to one of Claims 5 to 7, **characterized in that** the output of the ejector (30) is connected to
a) a device (36) for pressure-type fluidized-bed firing and/or
b) an afterburner (42) and/or
c) a coal gasifier (46).

9. Device according to one of Claims 5 to 8, **characterized in that** it is installed in a power station (2), in particular in a power station (2) with a device (36) for pressure-type fluidized-bed firing and with a coal gasifier (46).

## Revendications

1. Procédé pour augmenter la pression d'un gaz, notamment de l'air fourni par un compresseur (8) dans une centrale (2) électrique, comprenant une pompe (24) intermédiaire, le courant (m) massique du gaz étant subdivisé en un courant (t1) partiel petit et en un courant (t2) partiel grand, le courant (t1) partiel petit étant envoyé par la pompe (24) intermédiaire à un éjecteur (30) et y étant réuni au grand courant (t2) partiel qui est envoyé à la tubulure d'aspiration de l'éjecteur (30) et le courant (m') massique réuni du gaz étant prélevé à la sortie de l'éjecteur (30),
**caractérisé en ce que** l'on refroidit le petit courant (t1) partiel avant de l'envoyer à la pompe (24) intermédiaire.

2. Procédé suivant la revendication 1,
**caractérisé en ce que** le petit courant (t1) partiel représente de 20 à 40 %, de préférence environ 20 % du courant (m) massique du gaz fourni.

3. Procédé suivant l'une des revendications 1 ou 2,
**caractérisé en ce que** l'on lisse les fluctuations de pression du petit courant (t1) partiel sortant par la sortie de la pompe (24) intermédiaire.

4. Procédé suivant l'une des revendications 1 à 3,
**caractérisé en ce que** la différence de pression dans le courant (m, m') massique est, avant la subdivision et après la réunion, d'environ 2 bars.

5. Dispositif (16) pour augmenter la pression d'un gaz, notamment de l'air fourni par un compresseur (8) dans une centrale (2) électrique, comprenant une pompe (24) intermédiaire, un diviseur (20) de courant par lequel le courant (m) massique du gaz peut être subdivisé en un petit courant (t1) partiel et en un grand courant (t2) partiel, un éjecteur (30) auquel le petit courant (t1) partiel peut être envoyé par l'intermédiaire de la pompe (24) intermédiaire et un conduit (34) de dérivation, par lequel le grand courant (t2) partiel peut être envoyé à la tubulure d'aspiration de l'éjecteur (22),
**caractérisé en ce que** le petit courant (t1) partiel peut être envoyé à la pompe (24) intermédiaire par l'intermédiaire du dispositif (22) de refroidissement de l'air.

6. Dispositif suivant la revendication 5,
**caractérisé en ce que** le petit courant (t1) partiel représente de 20 à 40 %, de préférence environ 20 % du courant (m) massique d'air fourni.

7. Dispositif suivant l'une des revendications 5 ou 6,
**caractérisé en ce que** la pompe (24) intermédiaire communique avec l'éjecteur (30) par un conduit (28) auquel est raccordé un récipient (32) tampon de lissage de fluctuations de pression.

8. Dispositif suivant l'une des revendications 5 à 7,
**caractérisé en ce que** la sortie de l'éjecteur (30) communique avec
a) un dispositif (36) de combustion en lit fluidisé sous pression et/ou
b) un post-brûleur (42) et/ou
c) un gazogène (46) à charbon.

9. Dispositif suivant l'une des revendications 5 à 8,
**caractérisé en ce qu'**il est monté dans une centrale (2) électrique, notamment dans une centrale (2) électrique ayant un dispositif (36) de combustion en lit fluidisé sous pression et un gazogène (46) à charbon.
